# EUROPÄISCHE PATENTANMELDUNG

(11) **EP 1 744 010 A2**
(43) Veröffentlichungstag der Anmeldung: **17.01.2007**
(21) Anmeldenummer: 06013432.7
(22) Anmeldetag: 29.06.2006
(51) Int. Cl.: E06B 9/60, B60J 1/20

(54) **Wickelwelle für ein flexibles Flächengebilde**

(30) Priorität: 15.07.2005 DE 102005034620
(71) Anmelder: BOS GmbH & Co. KG, 73760 Ostfildern (DE)
(72) Erfinder: Syrochidis, Stilianos, 71334 Waiblingen (DE); Schneider, Roland, 89075 Ulm (DE); Wald, Knud, 47807 Krefeld (DE)
(74) Vertreter: Patentanwälte Ruff, Wilhelm, Beier, Dauster & Partner

(57) **Zusammenfassung**

Eine Wickelwelle, die eine in Aufwickelrichtung wirksame, zu einer Wickelachse (W) ausgerichtete, wendelförmige Wickelfeder (4) umfasst, die mit einer Vielzahl von Federwindungen versehen ist, die für die Aufwickelfunktion wirksam sind, ist bekannt.
Erfindungsgemäß sind die wirksamen Federwindungen über die Länge der Wickelfeder gesehen abschnittsweise relativ zueinander verändert konfiguriert.
Einsatz für Schutzvorrichtungen im Fahrzeuginnenraum.

## Beschreibung

Die Erfindung betrifft eine Wickelwelle für ein flexibles Flächengebilde, die eine in Aufwickelrichtung wirksame, zumindest im Wesentlichen längs einer Wickelachse ausgerichtete, wendelförmige Wickelfeder umfasst, die mit einer Vielzahl von Federwindungen versehen ist, die für die Aufwickelfunktion wirksam sind.

Derartige Wickelwellen zum Auf- und Abrollen von flexiblen Flächengebilden sind aus der EP 1 122 400 B1 oder der DE 695 00 503 T2 (EP 0 666 405 B1) allgemein bekannt. Bekannte Wickelwellen sind in einer entsprechenden Aufnahmeeinheit, insbesondere in einem Kassettengehäuse oder ähnlichem, drehbar gelagert. Außenseitig auf den Wickelwellen ist jeweils ein flexibles Flächengebilde befestigt, das durch Drehung der Wickelwelle von dieser auf- oder abgewickelt werden kann. In Aufwickelrichtung des flexiblen Flächengebildes wirkt auf die Wickelwelle eine wendelförmige Wickelfeder, die sich koaxial zur Wickelachse der Wickelwelle innerhalb der rohrförmigen Wickelwelle erstreckt. Die Wickelfeder ist wendelförmig aus einer Vielzahl von Federwindungen ausgeführt. Je nach Ausführung erstreckt sich durch die Wendelfeder hindurch eine Wickelstange, auf der die Wickelfeder angeordnet ist, oder aber die Wickelfeder erstreckt sich frei durch die rohrförmige Wickelwelle hindurch, wobei jeweils lediglich die endseitigen Federwindungen an entsprechenden Haltezapfen abgestützt sind. Bei allen Wickelwellen ist ein Ende der Wickelfeder an einem drehfesten Gehäuseteil und das andere Ende an der drehbeweglichen Wickelwelle angeordnet, um auf die Wickelwelle das entsprechende Drehmoment in Aufwickelrichtung aufbringen zu können.

Problematisch bei den bekannten Wickelvorrichtungen ist es, dass beim Auf- oder Abwickeln des Flächengebildes Geräusche im Bereich der Wickelwelle auftreten können.

Aufgabe der Erfindung ist es, eine Wickelwelle der eingangs genannten Art zu schaffen, bei der die Geräuschbildung während eines Auf- oder Abwickelvorganges reduziert ist.

Diese Aufgabe wird dadurch gelöst, dass die wirksamen Federwindungen über die Länge der Wickelfeder gesehen abschnittsweise relativ zueinander verändert konfiguriert sind. Die erfindungsgemäße Lösung geht von der Erkenntnis aus, dass für die Geräuschbildung in erster Linie die Federwindungen der Wickelfeder verantwortlich sind, die entweder aneinander oder an einem Innenumfang der Wickelwelle oder gegebenenfalls an einer innenliegenden Wickelstange reiben. Unter den wirksamen Federwindungen sind die freien Federwindungen zwischen den endseitig eingespannten oder festgelegten Federwindungen zu verstehen, die für die Federspannung und das aufgebrachte Drehmoment verantwortlich sind. Die wirksamen Federwindungen sind somit die Windungen, die sich während einer Drehung der Wickelwelle axial und/oder radial bewegen. Durch die erfindungsgemäße Lösung wird eine Geräuschbildung innerhalb der rohrförmigen Wickelwelle erheblich reduziert. Durch die abschnittsweise veränderte Konfiguration liegt die Wickelfeder lediglich noch abschnittsweise am Innenumfang der Wickelwelle oder an einer entsprechenden Wickelstange an. Es sind verbesserte Ausgleichs- und Ausweichmöglichkeiten für die Wickelfeder geschaffen. Die erfindungsgemäße Lösung eignet sich insbesondere für den Einsatz der Wickelwelle in Schutzvorrichtungen für einen Fahrzeuginnenraum, vorzugsweise für Laderaumabdeck- und/oder -trennvorrichtungen oder für Sonnenschutzvorrichtungen für Fahrzeugscheiben. Es ist aber auch möglich, die erfindungsgemäße Wickelwelle in anderen Wickelvorrichtungen innerhalb oder außerhalb eines Fahrzeugs einzusetzen. Ein weiterer, bevorzugter Einsatzbereich liegt bei Wickelvorrichtungen für die Beschattung von immobilen Räumen oder Gebäuden.

In Ausgestaltung der Erfindung ist die veränderte Ausbildung durch eine Querschnittsveränderung der Federwindungen ausgeführt. Dabei kann die Kontur der Federwindungen, der Durchmesser der Federwindungen oder ähnliches verändert sein. So kann insbesondere ein im Querschnitt kreisförmiger Abschnitt von Federwindungen in einen im Querschnitt ovalen oder mehreckigen Abschnitt von Federwindungen übergehen, oder zwei unterschiedliche Abschnitte kreisförmiger Federwindungen können voneinander abweichende Durchmesser aufweisen.

In weiterer Ausgestaltung der Erfindung ist die veränderte Ausbildung durch eine exzentrische Versetzung von Federwindungen relativ zu der Wickelachse vorgesehen. Bei dieser Ausgestaltung kann es vorteilhaft möglich sein, die Querschnitte aller Federwindungen zumindest weitgehend identisch zueinander beizubehalten und dafür mehrere Abschnitte von Federwindungen parallel versetzt zu der Wickelachse auszurichten. Alternativ ist es vorgesehen, die verschiedenen Abschnitte von querschnittsgleichen Federwindungen in Längsrichtung der Wickelachse zickzackartig aneinander zu schließen. Bei weiteren Ausführungsformen ist es auch möglich, die zickzackartige Ausführung und die parallel versetzte exzentrische Ausführung in geeigneter Weise miteinander zu kombinieren.

In weiterer Ausgestaltung der Erfindung sind verschiedene Abschnitte der wirksamen Federwindungen zueinander entgegengerichtet gewickelt. Dies ist eine vorteilhafte veränderte Konfiguration der Wickelfeder.

In weiterer Ausgestaltung der Erfindung ist die Querschnittsveränderung durch eine Querschnittsverjüngung und/oder eine Querschnittserweiterung von Federwindungen ausgeführt. Dadurch ergeben sich Abschnitte mit kleinerem und Abschnitte mit größerem Wickeldurchmesser.

Die Veränderungen der Konfiguration der Wickelfeder können sich - auf die Länge der Wickelachse bezogen - über gleichlange oder über unterschiedlich lange Abschnitte von Federwindungen erstrecken und sich regelmäßig oder unregelmäßig wiederholen. Es ist auch möglich, über die gesamte Länge der Wickelfeder lediglich eine einzelne Konfigurationsänderung vorzunehmen, so dass sich lediglich zwei unterschiedliche Abschnitte von Federwindungen der Wickelfeder über die Länge der Wickelfeder ergeben.

In weiterer Ausgestaltung der Erfindung gehen die zueinander veränderten Abschnitte sprung- oder stufenförmig oder stetig und fließend ineinander über. Die jeweilige, für die Praxis zutreffende Auswahl ist abhängig von der gewünschten Aufwickelcharakteristik, von der Länge der Wickelwelle und gegebenenfalls von anderen Parametern.

Vorzugsweise ist ein Federdraht der Wickelfeder über seine gesamte Wickellänge mit durchgängig dem gleichen Querschnitt versehen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Längsschnittdarstellung einen Ausschnitt einer erfindungsgemäßen Wickelwelle, auf der mehrere Lagen eines flexiblen Flächengebildes aufgewickelt sind,
- Fig. 2: eine weitere Ausführungsform einer erfindungsgemäßen Wickelwelle ähnlich Fig. 1,
- Fig. 3: eine weitere Ausführungsform einer erfindungsgemäßen Wickelwelle ähnlich den Fig. 1 und 2, wobei hier die Wickellagen des flexiblen Flächengebildes aus Übersichtlichkeitsgründen weggelassen sind,
- Fig. 4: eine Wickelfeder für eine Wickelwelle gemäß Fig. 3 und
- Fig. 5: eine weitere Wickelfeder für eine erfindungsgemäße Wickelwelle.

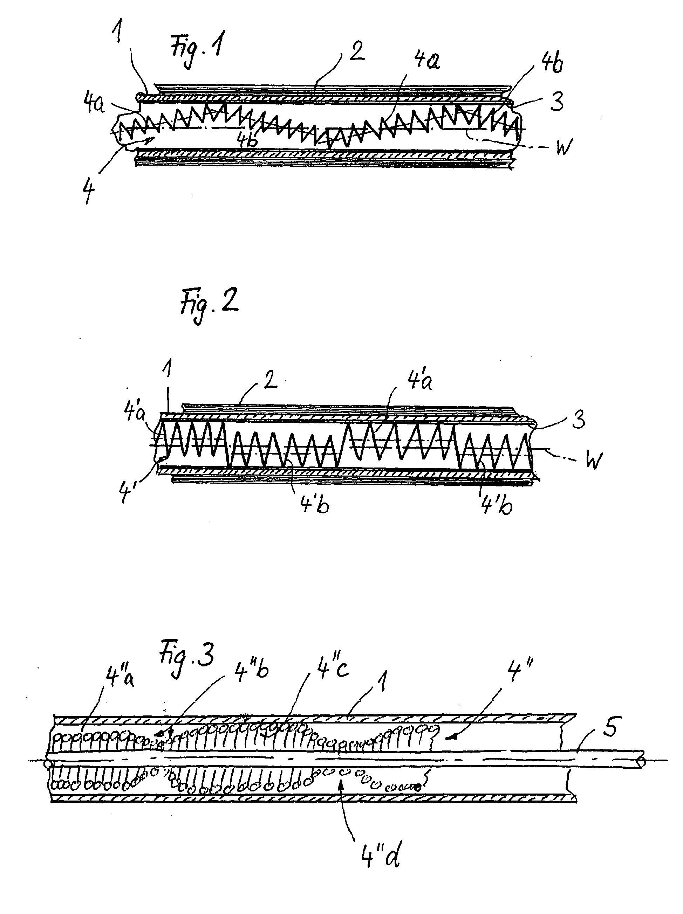

Wickelwellen, wie sie anhand der Fig. 1 bis 3 dargestellt sind, sind jeweils Teile jeweils einer Schutzvorrichtung für einen Fahrzeuginnenraum, insbesondere in Form einer Laderaumabdeckung und/oder einer Laderaumabtrennung oder einer Beschattungsvorrichtung für wenigstens eine Fahrzeugscheibe oder einen Glasdachabschnitt des Fahrzeugs. Derartige Schutzvorrichtungen sind mit Wickelvorrichtungen zum Auf- und Abwickeln eines entsprechenden flexiblen Flächengebildes versehen, die jeweils wenigstens eine Wickelwelle im Sinne der Erfindung umfassen.

Eine derartige Wickelwelle 1 ist gemäß Fig. 1 rohrförmig ausgeführt und in nicht näher dargestellter Weise zwischen zwei Gehäuseseitenteilen um eine Wickelachse W drehbeweglich aufgenommen. Auf der rohrförmigen Wickelwelle 1 ist ein flexibles Flächengebilde 2 in mehreren Lagen aufgewickelt. Das Abziehen des Flächengebildes 2 von der Wickelwelle 1 erfolgt durch manuelles oder durch motorisches Abziehen. Beim Abziehen oder Abwickeln des Flächengebildes 2 spannt sich im Inneren der Wickelwelle 1 eine Wickelfeder 4 nach Art eines Federmotors, um das Flächengebilde 2 nach Wegnahme der Zugbelastung in seine auf der Wickelwelle 1 befindliche Lagerposition wieder aufwickeln zu können. Beim dargestellten Ausführungsbeispiel gemäß Fig. 1 ist in der aus Metall bestehenden, rohrförmigen Wickelwelle 1 zusätzlich noch ein Kunststoffrohr 3 vorgesehen, das vorzugsweise reib- oder stoffschlüssig drehfest mit dem Innenumfang der Wickelwelle 1 verbunden ist und sich über die gesamte Länge der Wickelwelle 1 erstreckt.

Die Wickelfeder 4 ist in nicht näher dargestellter Weise endseitig mit der Wickelwelle 1 einerseits drehfest und mit dem stationären Gehäuseteil andererseits fest verbunden. Die Wickelfeder 4 ist schrauben- oder wendelförmig aus einem Federdraht hergestellt und weist eine Vielzahl von Federwindungen auf. Die Federwindungen bilden mehrere Windungsabschnitte 4a und 4b, die in Längsrichtung der Wickelfeder aneinander schließen. Jeder Windungsabschnitt wird durch ein zylindrisches Federwindungspaket mit jeweils gleichem Windungsdurchmesser gebildet. Allerdings ist jedes Federwindungspaket mit seiner Längsachse (strichpunktierte Darstellung) relativ zur Wickelachse W geneigt dargestellt, wobei die aneinander schließenden Federwindungspakete 4a, 4b jeweils in einem stumpfen Winkel aneinander anschließen und jeweils mit ihrer Mitte die Wickelachse W schneiden. Dadurch ergibt sich ein wellenartiger Verlauf der Wickelfeder 4, wie anhand der Fig. 1 erkennbar ist, wobei jeweils Scheitelpunkte zwischen zwei benachbarten Windungsabschnitten 4a, 4b an der Innenseite des Kunststoffrohres 3 der Wickelwelle 1 anliegen. Dadurch ergibt sich ein wellenartiger Verlauf der Wickelfeder 4, wie anhand der Fig. 1 erkennbar ist, wobei jeweils Scheitelpunkte zwischen zwei benachbarten Windungsabschnitten 4a, 4b an der Innenseite des Kunststoffrohres 3 der Wickelwelle 1 anliegen.

Bei der Ausführungsform nach Fig. 2 sind Wickelwelle 1, Kunststoffrohr 3 und Flächengebilde 2 in identischer Weise aufgebaut und um die Wickelachse W drehbeweglich gelagert, wie dies bei der Wickelwelle 1 gemäß Fig. 1 bereits erläutert wurde. Für eine nähere Offenbarung wird daher auf die Ausführungen zu Fig. 1 verwiesen. Wesentlicher Unterschied bei der Wickelwelle 1 nach Fig. 2 ist es, dass die Wickelfeder 4' ebenfalls mehrere unterschiedliche Federwindungsabschnitte 4'a, 4'b aufweist, die aber nicht schräg zur Wickelachse W, sondern vielmehr parallel versetzt zu der Wickelachse W ausgerichtet sind. Dabei sind die Federwindungsabschnitte mit ihren jeweiligen Längsachsen alternierend parallel ober- oder unterhalb der Wickelachse W angeordnet, so dass alternierend die Federwindungsabschnitte 4'a, 4'b an gegenüberliegenden Innenwandungsbereichen des Kunststoffrohres 3 und damit der Wickelwelle 1 anliegen.

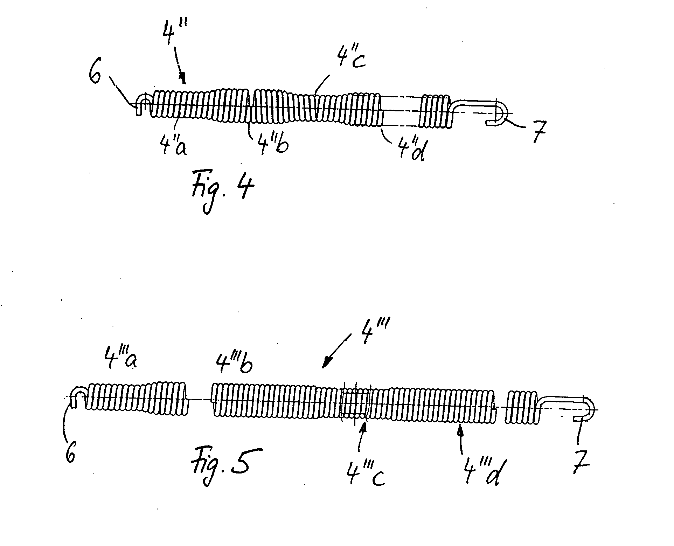

Bei der Ausführung nach Fig. 3 ist der Wickelwelle 1 eine durchgängige Wickelstange 5 zugeordnet, die drehfest zwischen den gegenüberliegenden, stationären Gehäuseseitenteilen erstreckt ist. Die Wickelfeder 4" greift mit einem Stirnende an der stationären Wickelstange 5 und mit ihrem anderen Stirnende an der rohrförmigen Wickelwelle 1 an. Aus Übersichtlichkeitsgründen sind bei der Ausführungsform nach Fig. 3 die Wickellagen des Flächengebildes weggelassen. Ein innenliegendes Kunststoffrohr benötigt die rohrförmige Wickelwelle 1 gemäß Fig. 3 nicht notwendigerweise. Die Wickelfeder 4" gemäß der Ausführungsform nach Fig. 3 erstreckt sich über nahezu die gesamte Länge der Wickelwelle 1 und variiert ihre im Wesentlichen kreisförmigen Querschnitt über ihre Länge mehrfach. Dadurch ergeben sich verschiedene Federwindungsabschnitte 4"a, 4"b, 4"c, 4"d. Die kleinen Federwindungsabschnitte 4"b und 4"d umschließen die innenliegende Wickelstange 5 und liegen damit an dieser an. Die großen Federwindungsabschnitte 4"c liegen innenseitig an der rohrförmigen Wickelwelle 1 an.

Bei der Ausführungsform nach Fig. 4 wird eine Veränderung der Konfiguration der Wickelfeder 4" ergänzend dadurch vorgenommen, dass die Federwindungsabschnitte 4"a, 4"b, 4"c, 4"d zum Teil entgegengesetzt zueinander gewickelt sind. Die Wicklungsübergänge sind an den Stellen, an denen die Bezugslinien der Bezugszeichen 4"b und 4"c auf die Wickelfeder 4" auftreffen, erkennbar. Zudem ist bei den entsprechenden Federwindungsabschnitten 4"a, 4"b, 4"c, 4"d der Windungsdurchmesser über die entsprechende Länge des jeweiligen Federwindungsabschnittes unterschiedlich zu dem jeweils benachbarten Federwindungsabschnitt gestaltet. Der Übergang zwischen zwei Federwindungsabschnitten erfolgt stetig und fließend durch allmähliche Querschnittsvergrößerung oder Querschnittsverjüngung. Die beiden Federenden 6, 7 werden in einfacher Weise durch hakenförmige Gestaltungen gebildet.

Bei der Ausführungsform nach Fig. 5 weist die Wickelfeder 4''' zu der Wickelfeder 4" identisch gestaltete Stirnenden 6, 7 auf. Bei dieser Ausführungsform sind alle Federwindungen in der gleichen Richtung gewickelt. Über die Länge der Wickelfeder 4''' gesehen ergeben sich mehrere Federwindungsabschnitte 4"'a bis 4'''d, die unterschiedliche Windungsdurchmesser aufweisen. Ein Übergang von dem kleinen ersten Windungsabschnitt 4"'a zu dem zweiten, großen Windungsabschnitt 4'''b erfolgt stetig und fließend durch allmähliches Ansteigen des Windungsdurchmessers. Ein Übergang zwischen dem Federwindungsabschnitt 4"'b und dem Federwindungsabschnitt 4"'c bzw. zwischen dem Federwindungsabschnitt 4"'c und dem Federwindungsabschnitt 4"'d erfolgt hingegen stufen- oder sprungförmig, wie anhand der Fig. 5 erkennbar ist. In der Zeichnung nach Fig. 5 ist der mittlere Bereich des Federwindungsabschnittes 4"'c im Längsschnitt dargestellt.

## Patentansprüche

1. Wickelwelle für ein flexibles Flächengebilde, die eine in Aufwickelrichtung wirksame, zumindest im Wesentlichen längs einer Wickelachse ausgerichtete, wendelförmige Wickelfeder umfasst, die mit einer Vielzahl von Federwindungen versehen ist, die für die Aufwickelfunktion wirksam sind, **dadurch gekennzeichnet, dass** die wirksamen Federwindungen (4a, 4b, 4'a, 4'b, 4"a, 4"b. 4"c, 4"d, 4'''a, 4"'b, 4"'c, 4'''d) über die Länge der Wickelfeder (4, 4', 4", 4''') gesehen abschnittsweise relativ zueinander verändert konfiguriert sind.

2. Wickelwelle nach Anspruch 1, **dadurch gekennzeichnet, dass** die veränderte Konfiguration durch eine Querschnittsveränderung ausgeführt ist.

3. Wickelwelle nach Anspruch 1 oder 2, **dadurch gekennzeichnet, dass** die veränderte Konfiguration durch eine exzentrische Versetzung von Federwindungen relativ zu der Wickelachse (W) vorgesehen ist.

4. Wickelwelle nach einem der vorhergehenden Ansprüche, **dadurch gekennzeichnet, dass** verschiedene Abschnitte (4"a bis 4"d) der wirksamen Federwindungen zueinander entgegengerichtet gewickelt sind.

5. Wickelwelle nach einem der vorhergehenden Ansprüche, **dadurch gekennzeichnet, dass** die Querschnittsveränderung durch eine Querschnittsverjüngung und/oder eine Querschnittserweiterung von Federwindungen ausgeführt ist.

6. Wickelwelle nach einem der vorhergehenden Ansprüche, **dadurch gekennzeichnet, dass** die zueinander veränderten Abschnitte (4a, 4b; 4'a, 4'b; 4"a bis 4"d; 4"'a bis 4"'d) sprung- oder stufenförmig oder stetig und fließend ineinander übergehen.

7. Wickelwelle nach einem der vorhergehenden Ansprüche, **dadurch gekennzeichnet, dass** ein Federdraht der Wickelfeder (4, 4', 4", 4''') über seine gesamte Wickellänge durchgängig den gleichen Querschnitt aufweist.
